# EUROPEAN PATENT APPLICATION

(11) **EP 1 378 384 A2**
(43) Date of publication of application: **07.01.2004**
(21) Application number: 03011403.7
(22) Date of filing: 20.05.2003
(51) Int. Cl.: B60J 3/02

(54) **Sun visor for vehicle**

(30) Priority: 05.07.2002 IT TO20020129
(71) Applicant: Olsa S.p.A., 10090 Rivoli (IT)
(72) Inventor: Bosco, Eugenio, 10138 Torino (IT)
(74) Representative: Lotti, Giorgio

(57) **Abstract**

Sun visor (1) for vehicles presenting a frame (2), at least one light (5) supported by the frame (2), a support plate (6) for fixing the frame (2) to the vehicle, and an L-shaped bracket (7) which is interposed between the support plate (6) and the frame (2) in order to permit movement according to two axes (AO, AV) which are at right angles to each other of the frame (2) itself; an electrical device (8) being provided in order to supply the light (5) and presenting an electrical connector (9) which is integral with the support plate (6), and at least two conductive bipolar islands (10) which are obtained on the bracket (7) and which are selectively electrically connectable to the connector (9) and to the light (5).

## Description

The present invention relates to a sun visor for vehicles.

Sun visors for vehicles of a well-known type comprise:
- a flat frame;
- a vanity mirror which is supported on one side of the frame;
- at least one light for illuminating the vanity mirror and which is supported by the frame in a position which is adjacent to the vanity mirror itself;
- a support plate for fixing the sun visor to the vehicle, and
- an L-shaped tubular bracket, which is interposed between the support plate and the frame for the movement according to two axes at right angles to each other of the frame itself, and comprising a horizontal portion which is coupled to the frame in such a way as to be able to rotate and a vertical portion which is coupled to the support plate in such a way as to be able to rotate.

Sun visors of the type which have just been described also present an electrical device for supplying the light comprising a circuit board which is mounted behind the mirror in order to both support and supply the light itself, and at least one cable, which extends internally along the whole of the tubular bracket as far as beyond the support plate in order to connect the circuit board to the vehicle's wiring system.

While sun visors of the type described above present a considerably reduced number of components they have, however, been found to be relatively uneconomical, both from the point of view of assembling them onto vehicles and from the point of view of production.

In fact, in order to assemble such sun visors onto vehicles, it is first of all necessary to fix the vertical portion of the tubular bracket inside the support plate and, subsequently, insert the above-mentioned cable along the tubular bracket itself, but such an operation of insertion has been shown to be quite onerous.

As far as the production point of view is concerned, it has been found that the production costs relating to these kinds of sun visors are not at all competitive, and it would thus be opportune to seek a further reduction in the number of component elements without, however, impinging upon the functional characteristics of the sun visor in any way.

The aim of the present invention is to produce a sun visor for vehicles, which will be totally free of the disadvantages described above.

According to the present invention, a sun visor for vehicles will be produced, comprising a frame, at least one light supported by the frame, a support plate for fixing the frame to the vehicle, and an L-shaped bracket which is interposed between the support plate and the frame in order to permit movement according to two axes which are at right angles to each other of the frame itself; the sun visor being characterised by the fact that it comprises an electrical device for supplying the light which comprises an electrical connector which is integral with the support plate, and at least two conductive bipolar islands, which are obtained on the bracket and which are selectively electrically connectable to the connector and to the light.

The present invention will now be described with reference to the attached drawings, which illustrate a non-limiting form of embodiment of the present invention, in which:
- FIGURE 1 illustrates, with some parts in section and some parts removed for reasons of clarity, a first preferred form of embodiment of a sun visor to be produced according to the dictates of the present invention;
- FIGURE 2 illustrates, on a reduced scale, a detail of the sun visor shown in FIGURE 1;
- FIGURE 3 is a section, with some parts removed for reasons of clarity, of FIGURE 2 according to the line III-III;
- FIGURE 4 is a section view, with some parts removed for reasons of clarity, of the sun visor shown in FIGURE 1; and
- FIGURE 5 is a section of FIGURE 1 according to the line V-V.

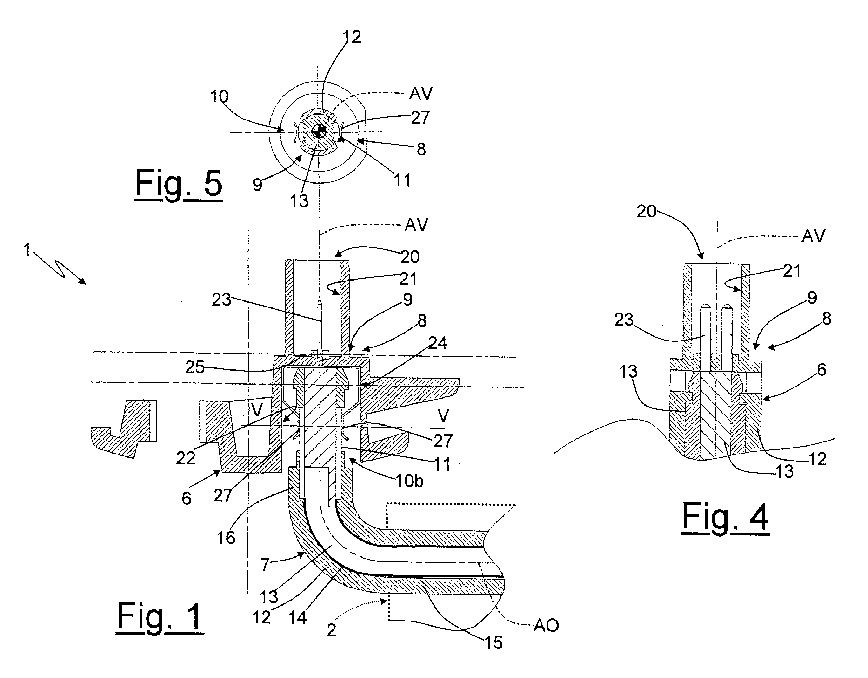

With reference to FIGURE 1, the number 1 refers to a sun visor in its entirety, which is suitable for being installed in the proximity of a windscreen (which is not illustrated) of a vehicle, and which can rotate around a horizontal axis AO between an initial resting position, in which the sun visor 1 is completely raised, towards a first final arrested position, in which the sun visor 1 is arranged abutted the windscreen, and through an intermediate activated position, in which the sun visor 1 is rotated around the axis AO at an angle of at least 90° in relation to its initial position.

The sun visor 1 can also be rotated around a vertical axis AV which is at right angles to the axis AO starting at least from the intermediate activated position and from and towards a second final arrested position which is alternative to the first final position, and in which the sun visor 1 is rotated around the axis AV at an angle which is at least equal to or greater than 90°.

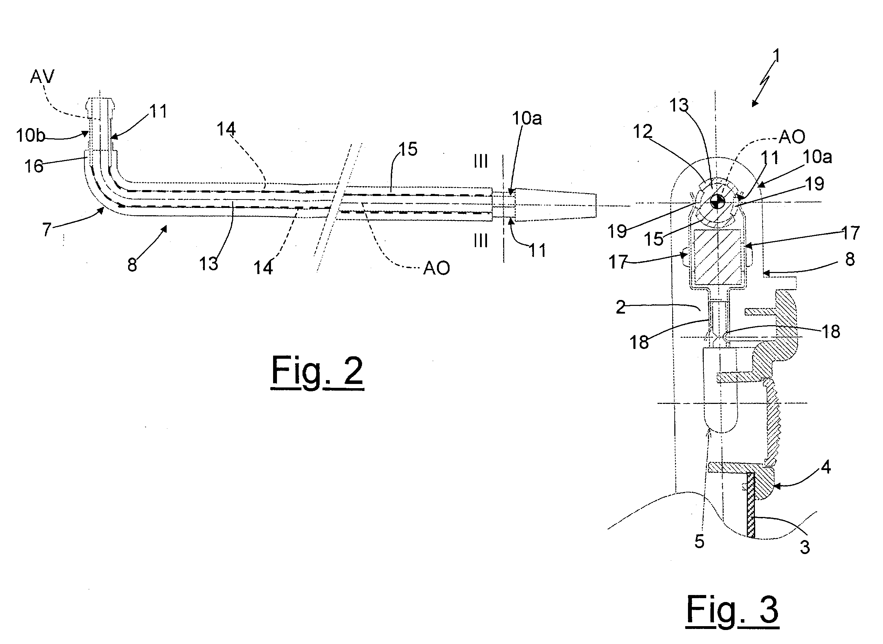

According to the illustrations shown in FIGURES 2 and 3, the sun visor 1 comprises a frame 2, a vanity mirror 3 which is supported on a side 4 of the frame 2, at least one light 5 for illuminating the vanity mirror 3 and which is supported by the frame 2 in a position which is adjacent to the vanity mirror 3 itself, a support plate 6 for fixing the frame 2 to the vehicle, and an L-shaped tubular bracket which is interposed between the plate 6 and the frame 2 for the movement according to the axes AO and AV of the frame 2 itself.

The sun visor 1 also includes an electrical device 8 for supplying the light 5, which is substantially integral with the bracket 7 and which in turn comprises an electrical connector 9 which is integral with the plate 6, and two conductive bipolar islands 10 which are obtained on the bracket 7 and which are selectively electrically connectable to the connector 9 and to the light 5.

In particular, and as is even better illustrated in FIGURE 5, each of the two conductive bipolar islands 10 is defined by two windows 11, which are obtained through an external wall 12 of the bracket 7 itself, and which present a limited radial extension in order to disconnect the light 5 in the case of the rotation according to a determined angle of the sun visor 1 itself around at least one of the two axes AO or AV. In other words, the two windows 11 of each conductive bipolar island 10 are configured in such a way as to disconnect the light 5 from the connector 9 both in the above-mentioned initial resting position and in the two above-mentioned final arrested positions as a consequence of rotating the frame 2 around the axis AO or around the axis AV.

The electrical device 8 also comprises a reinforcing core 13 which is arranged inside the bracket 7 abutted the external wall 12 for the electrical connection of the two conductive bipolar islands 10 and which is provided with two metal connecting tracks 14 between the conductive bipolar islands 10. The external wall 12, the core 13 and the tracks 14 are co-moulded together with each other in such a way as to obtain, at the same time, the windows 11 and, thus, to eliminate the necessity, as previously described, of having to pass any kind of cable inside the bracket 7.

The bracket 7 comprises two end arms 15 and 16, of which the arm 15 extends along the axis AO and is coupled in an axially constrained manner and an angularly free manner to the frame 2, while the arm 16 extends along the axis AV and is coupled in an axially constrained manner and an angularly free manner to the plate 6. The free rotation of the frame 2 on the arm 15 permits the rotation around the axis AO of the sun visor 1, while the free rotation of the arm 16 in the plate 6 permits the rotation of the sun visor 1 around the axis AV.

According to the illustrations shown in FIGURES 1 and 3, a conductive bipolar island 10a of the two conductive bipolar islands 10 is obtained along the arm 15, and is selectively electrically connectable to the light 5 by means of the interposition of two elastic clips 17, which make up part of the electrical device 8, and are integral with the frame 2, and are engaged on the arm 15 in correspondence with the conductive bipolar island 10a itself.

In particular, the two clips 17 comprise respective ends 18 which are connected to the light 5, as well as respective free ends 19, which are shaped in such a way as to be able to slide on the wall 12 or to be able to be introduced inside the relative window 11 in accordance with the angular position of the frame 2 around the axis AO.

According to the illustrations shown in FIGURES 1, 4 and 5, the plate 6 comprises a tubular housing 20 and two compartments 21 and 22, of which the compartment 21 is an external compartment and is suitable for interacting with the vehicle, while the compartment 22 is an internal compartment and which interacts with the arm 16 in correspondence to which is obtained the other conductive bipolar island 10b of the two conductive bipolar islands 10 in order to be selectively electrically connectable to the connector 9 itself.

In particular, the connector 9 is housed inside the two compartments 21 and 22, and it comprises an external portion 23 which is defined by a two-pole plug which is arranged inside the compartment 21, and an internal portion 24 which is defined by two further elastic clips, which are arranged inside the compartment 22 and which are engaged on the bracket 7 in correspondence with the conductive bipolar island 10b.

The two clips 24 are connected to the two-pole plug by means of a dividing baffle 25 of the two compartments 21 and 22, and they comprise respective free ends 27, which are shaped in such a way as to be able to slide on the wall 12 or to be able to be introduced inside the relative windows 11 in accordance with the angular position of the frame 2 around the axis AV.

It is obvious from the above description that the sun visor 1, apart from permitting a further reduction in the number of components in comparison with sun visors which are already in use, and a consequent reduction in production costs, also permits a simpler and easier assembly operation in that it is sufficient to connect the two-pole plug 23 to the vehicle's wiring system and connect in a well known manner the plate 6 to the vehicle itself in order to render the sun visor 1 itself integral with the vehicle.

In addition, by configuring the angular amplitude of the windows 11, which is substantially equal to 30° in the form of embodiment illustrated, in ways which are different to the illustration shown, it is also possible to vary the activation zone of the electrical device 8 or in other words the activation of the light 5.

In fact, according to the current angles of the windows 11, the clips 24 are in contact with the relative conductive bipolar islands 10b when the arm 15 is arranged in its initial non-rotated position, while they are arranged on the wall 12 when the arm 15 is rotated by at least 90° around the axis AV, or in other words with the sun visor 1 arranged in its second final arrested position.

The clips 17 are in contact with the relative conductive bipolar islands 10a when the frame 2 is arranged only in its rotated position of at least 90° around the axis AV, or in other words with the sun visor 1 arranged in its intermediate activated position, while they are arranged in contact with the wall 12 when the frame 2 is arranged in its initial or final position, or in other words with the sun visor 1 arranged in its initial resting position or in its first final arrested position.

It is intended that the present invention should not be limited to the forms of embodiment herein described and illustrated, which are to be considered as examples of forms of embodiment of the sun visor 1, which may be subject to further modifications relating to the shape and disposition of its parts, as well as to details pertaining to its construction and assembly.

## Claims

1. Sun visor (1) for vehicles comprising a frame (2), at least one light (5) supported by the frame (2), a support plate (6) for fixing the frame (2) to the vehicle, and an L-shaped bracket (7) which is interposed between the support plate (6) and the frame (2) in order to permit movement according to two axes (AO, AV) which are at right angles to each other of the frame (2) itself; the sun visor (1) being **characterised by** the fact that it comprises an electrical device (8) for supplying the light (5) which comprises an electrical connector (9) which is integral with the support plate (6), and at least two conductive bipolar islands (10), which are obtained on the bracket (7) and which are selectively electrically connectable to the connector (9) and to the light (5).

2. Sun visor according to Claim 1,
**characterised by** the fact that each of the said two conductive bipolar islands (10) is defined by two windows (11), which are obtained through an external wall (12) of the bracket (7) itself, and which present a limited radial extension in order to disconnect the said light (5) in the case of a rotation of the sun visor (1) itself according to a determined angle around at least one of the right-angled axes (AO/AV) of the said two right-angled axes (AO, AV).

3. Sun visor according to Claim 2, **characterised by** the fact that the electrical device (8) comprises a reinforcing core (13) which is arranged inside the bracket (7) abutted the said external wall (12) for the electrical connection of the said two conductive bipolar islands (10).

4. Sun visor according to Claim 3, **characterised by** the fact that the bracket (7) comprises a first end portion (15) which extends along a first right-angled axis (AO) of the said two right-angled axes (AO, AV) and which is coupled in an axially constrained manner and in an angularly free manner to the said frame (2); a first conductive bipolar island (10a) of the said two conductive bipolar islands (10) being arranged along the first end portion (15) of the bracket (7), and being selectively electrically connectable to the said light (5).

5. Sun visor according to Claim 4, **characterised by** the fact that the electrical device (8) comprises two first elastic clips (17) which are integral with the said frame (2) and which are engaged on the bracket (7) in correspondence with the first conductive bipolar island (10a).

6. Sun visor according to Claim 2, **characterised by** the fact that the support plate (6) comprises a tubular housing (20) with two compartments (21, 22) for housing the electrical connector (9); the electrical connector (9) comprising an external portion (23) which is defined by a two-pole plug which is arranged inside a first compartment (21) of the said two compartments (21, 22), and an internal portion (24) which is defined by two second elastic clips which are arranged inside a second compartment (22) of the said two compartments (21, 22) and which is engaged on the bracket (7) in correspondence to a second conductive bipolar island (10b of the said two conductive bipolar islands (10) .

7. Sun visor according to Claim 3, **characterised by** the fact that the bracket (7) comprises a second end portion (16) which extends along a second right-angled axis (AO) of the said two right-angled axes (AO, AV), and which is coupled in an axially constrained manner and an angularly free manner inside the second compartment (22) of the said tubular housing (20); the said second conductive bipolar island (10b being arranged substantially in proximity to the second end portion (16) of the bracket (7).

8. Sun visor according to Claim 2, **characterised by** the fact that the frame (2) can be rotated around a first right-angled axis (AO) of the said two right angled axes (AO, AV) between a first initial resting position towards a first final arrested position and through an intermediate activated position, in which the electrical device (8) supplies the light (5).

9. Sun visor according to Claim 8, **characterised by** the fact that the frame (2) can be rotated around a second right-angled axis (AV) of the said two right-angled axes (AO, AV) starting from at least the said intermediate activated position and from and towards a second final arrested position; the electrical device (8) supplying the light (5) only in the intermediate activated position.
